# EUROPEAN PATENT SPECIFICATION

(11) **EP 1 282 938 B1**
(45) Date of publication and mention of the grant of the patent: **02.01.2008**
(21) Application number: 01934117.1
(22) Date of filing: 09.05.2001
(51) Int. Cl.: H02P 27/02

(54) **MOTOR ENERGISATION CONTROL CIRCUIT**
MOTORSTEUERUNG
CIRCUIT DE COMMANDE D'ALIMENTATION DE MOTEUR

(30) Priority: 09.05.2000 GB 0011030
(43) Date of publication of application: 12.02.2003
(73) Proprietor: SAVAWATT (UK) LIMITED, Bidford-on-Avon, Warwickshire B50 4JH (GB)
(72) Inventor: ADDY, Malcolm Kirkby, Farthings, Stratford-upon-Avon CV37 8PE (GB); LEHAL, Tarinderjit Singh, Fircroft, Newbold Verdon LE9 9NF (GB)
(74) Representative: Allman, Peter John
(86) International application number: PCT/GB2001/002019
(87) International publication number: WO 2001/086800

(56) References cited:
- EP-A- 0 430 535
- EP-A- 0 518 244
- WO-A-97/45222
- DE-A- 4 037 072
- US-A- 5 412 303

## Description

The present invention relates to a motor energisation control circuit, particularly but not exclusively to a circuit for controlling the energisation of AC electric motors from a single or polyphase power supply.

The efficiency of electric motors is generally expressed as a percentage derived by dividing the useful power that the motor delivers by the electrical power that the motor consumes. In many applications of standard AC induction motors the maximum motor output power must be sufficient to accommodate the "worst case" conditions, for example, at start-up. Unfortunately these worst case conditions do not often apply and accordingly for much of the time the motor may be running at reduced load. Whereas the efficiency of a standard induction motor of the type used for example to drive the compressor of a refrigerator is typically of the order of 80%, the efficiency reduces rapidly, for example to less than 70% at half load. This is because losses due to electrical current through the windings (proportional to the current squared) and losses due to magnetic currents in the metal cores of the motor stator and the motor rotor (proportional to the applied voltage) are only reduced by a very small amount in response to reductions in the load on the motor.

The above-described problems associated with AC motors are well known and various proposals have been made to overcome them. In particular, electronic controllers have been produced which incorporate triac or other solid state switching devices which are controlled to modulate the voltage, current, phase angle or frequency of the power supplied to the motor. The known controllers do reduce energy iosses in the motor but may disrupt the operation of secondary control circuits with which motors are normally associated, for example radio frequency suppression circuits, capacitive correction circuits and on/off controls. Disruption problems can be overcome by carefully tailoring the controller to the particular motor and auxiliary circuits found in individual cases but it makes it extremely difficult to produce a controller which can be used in a wide variety of circumstances and in association with a wide variety of motors.

The known controllers may be classified as either fixed speed controllers, where the rotational speed of the controlled motor is substantially constant over its operating load range, or variable speed controllers where the rotational speed of the motor is varied by the controller. The latter controllers are frequently referred to as inverters or converters and, when used to control the energy consumption of an electric motor when operating below full load, require feedback of motor system parameters to determine the motor rotational speed. The fixed speed controllers rely on a fixed setting or sense the motor load through a change in phase angle or back electromotive force or other modification to the motor supply signal caused by a variation in motor load. In such controllers, there is no feedback signal path separate from the separate from the main supply cables.

One such fixed speed controller is described in British Patent no. 2198895, which detects back EMF to determine the load conditions. A solid state switch turns off the power to the motor for a constant period of time, but at different times within the power supply cycle.

In the case of fixed speed motor controllers, due to the wide variety of motor characteristics there are severe problems in obtaining meaningful measurements of modifications to the main supply signal and further problems in optimising the algorithms or transfer functions used for control purposes for such a wide range of motors. A further serious problem arises with capacitor run single phase motors, as the modifications to the main power supply signal to the motor due to a change in motor load may be swamped by the effects of the capacitor. The controller then attempts to control the capacitor rather than the motor. Likewise, any other electrical or electronic items between the controller and the motor, whether single or three phase, may distort or degrade the modifications to the main power signal due to the motor load. A particular case is where the controller has to be fitted at some distance from the motor, such that the impedance of the supply cables becomes significant.

US 5,412,303 describes a power control circuit for induction motors wherein a servo loop is used to control power input by controlling the minimal power consumption of motor operation. The minimum power consumption is measured by sensing current or power and operating the servo loop at or near a minimally sensed power consumption level.

DE 4037072 describes a universal motor speed regulator in which a control level is set proportional to the motor current.

EP-A-0,430,535 describes a control circuit for AC motors. The control circuit can be used in conjunction with circuits which measure the current absorbed by the motor, to give a control signal to make the motor switch from full power to partial power and *vice verse* whenever the current reaches pre-established thresholds.

It is an object of the present invention to obviate or mitigate the above problems.

According to the present invention there is provided a circuit for controlling the energisation of an AC electric motor, comprising a solid state switch which in use is connected to a power supply in series with the motor, means for cyclically switching the solid state switch on and off to control the supply of current to the motor from the power supply, means for controlling the proportion of time for which the solid state switch is turned on, means for sensing the magnitude of the current supplied to at least the motor, and means for calculating the value of a function of the current using the sensed current magnitude, the controlling means operating to minimise the calculated value, wherein the means for calculating the value of the function of the current are further defined such that the function represents the average of a series of values accumulated over a series of cycles of the supplied current.

When the switch-off time of the solid state switch is zero, full power is supplied to the motor. As the switch-off period is increased from zero, less power is supplied to the motor. The present invention utilises the non-linear load and current characteristics of AC motors where, under part load conditions, the effective voltage applied to the motor may be reduced, resulting in a reduction in current. The term "effective voltage" is used to distinguish the voltage applied to the motor from the supply voltage, the difference between the effective and supply voltages resulting from the presence of the solid state switch which when off prevents current flowing to the motor from the supply. Once the current has dropped to a minimum figure, a further reduction in effective voltage results in an increase in current because the losses are reduced but the motor still needs to draw power. The current therefore starts to rise again, giving rise to a "valley" effect in the amount of current in the circuit. Of course, as the load on the motor may be continually changing, and the current may therefore also be continually changing, this is an oversimplification of the actual situation, but nevertheless the present invention enables an improvement in motor efficiency by operating at or adjacent the "valley" in the function relating current to effective voltage.

The function which is used as the basis for calculating the value which is to be minimised may simply be related to current, for example the sum of a series of current values sampled during one or more cycles of the supplied current. Alternatively, the function may take into account parameters other than simple current and may be for example a representation of the sum of products of current values and voltages, the current values being sampled during one or more cycles of the power supply, and the voltages being representative of the supply voltage at the time of current sampling. Voltage values may be derived from a knowledge of the time within a half cycle at which current is sampled and a known voltage versus time characteristic for the power supply.

The current which is sensed may correspond only to that delivered directly to the motor or may include current supplied to ancillary circuits, notably the solid state switch and associated control elements.

Preferably the controlling means responds to a decrease in the calculated value by increasing the duration of periods for which the solid state switch is turned off and responds to an increase in the calculated value by decreasing the duration of periods for which the solid state switch is turned off. The rate at the which the calculated value changes is preferably monitored and the rate at which the duration of off periods changes is a function of the monitored rate of change. For example, the duration of off periods may be decreased at an increased rate if the rate at which the calculated value changes increases. Increments for increase delay may be smaller than those for decreased delay to provide a more rapid response to increases as against decreases in load.

Preferably a start-up circuit is provided which includes means for setting a predetermined start-up proportion of time for which the solid state switch is turned off, means for thereafter reducing the duration of periods for which the solid state switch is turned off until a predetermined minimum period is achieved, and means for thereafter enabling the controlling means to operate to minimise the calculated value.

The circuit also preferably comprises means for detecting a drop in power supply voltage, means for turning off the solid state switch in response to detection of drop in voltage, and means for thereafter restarting the circuit after a predetermine delay.

When the circuit is for use with a polyphase power supply, a solid state switch, current sensor, switching means and controlling means may be provided for each phase of the polyphase supply.

The or each solid state switch is preferably switched off either once or twice every half cycle of the power supply. Preferably, the duration of any period during which the switch is switched off in any single cycle is limited to a maximum value.

The current sensor preferably senses current in periods beginning with either zero voltage crossing or zero current crossing.

An embodiment of the present invention will now be described by way of example, with reference to the accompanying drawings, in which:
Fig. 1 is a schematic illustration of an arrangement known from the prior art;
Fig. 2 is a schematic illustration of an embodiment of the present invention indicating the differences between the basic approach of the present invention and that of the prior art as shown in figure 1;
Fig. 3 is a block diagram showing a circuit diagram for use in the embodiment shown in figure 2;
Fig. 4 is a detailed circuit diagram of the embodiment of figures 2 and 3;
Fig. 5 is a block diagram illustrating features of a microcontroller shown in figures 3 and 4;
Fig. 6 is a flow diagram illustrating the operation of the circuit of figures 2 to 5; and
Fig. 7 illustrates the relationship between current and effective supply voltage in a motor control circuit.

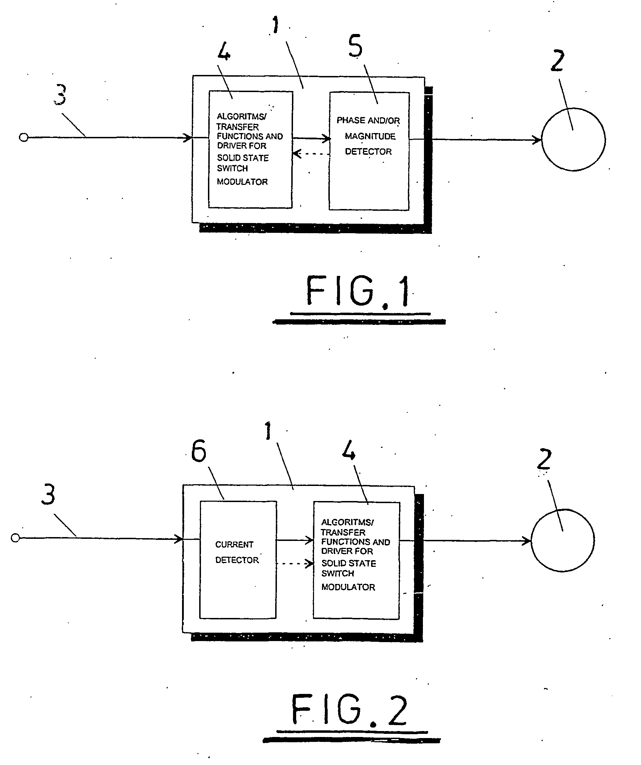

Referring to fig.1, in a conventional controller of the type used for reducing the power to an AC electric motor when that motor is operating with a reduced load, a controller 1 is connected on one side to both the terminals of a motor 2 and on the other side to both the neutral conductor and live conductor of an AC mains power supply 3. The controller 1 incorporates a solid state switch and circuitry 4 for monitoring the load on the motor and controlling the switch so as to reduce the power supplied as the load reduces. The detection of the motor load is made from changes to the phase and/or magnitude of the signal between the controller and the motor by means of a detector 5, which is fed back to the circuit 4. The circuit 4 interprets this information and drives the solid state power switch which, in turn, controls the power to the motor 2.

As illustrated in fig. 2, the controller 1 according to the present invention receives its control input information from a current detector 6. The current detector 6 measures the current delivered to the motor through the controller 1, in order to determine the operation of the solid state switch and circuitry 4. The operation of the solid state switch, in turn, controls the power supplied to the motor 2.

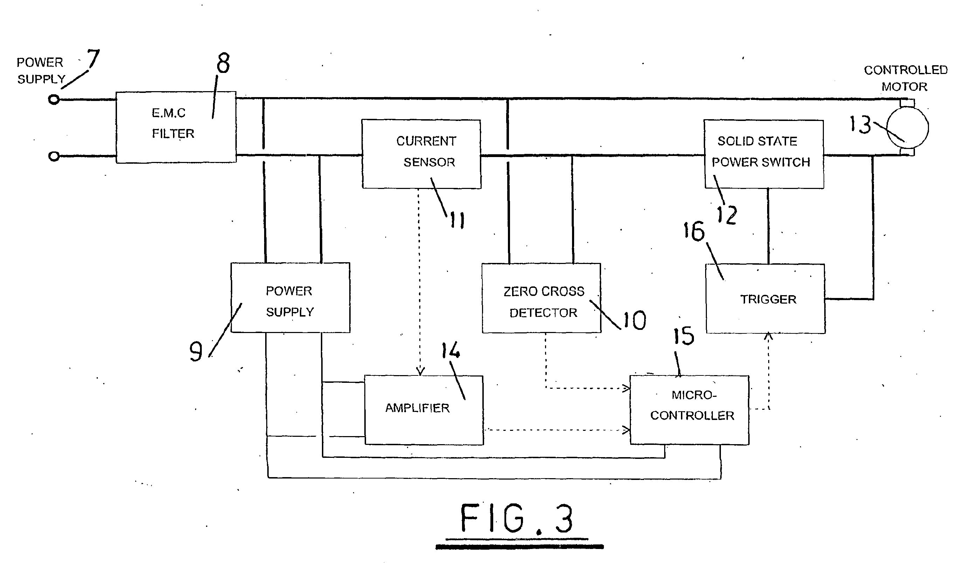

Referring now to fig. 3, the illustrated schematic shows the elements of a circuit operating according to the principles set out in figure 2 for a single phase configuration. A polyphase configuration has the same circuit elements but the number of live conductors from the power supply to the motor would be equal to the number of phases of the supply, and a neutral conductor may or may not be present. In a polyphase configuration, each phase would be provided with a respective current sensor and solid state switch.

The bold lines in fig. 3 signify power conductors, the fine lines low voltage conductors, and the dotted arrowed lines signify control signal paths.

Mains power supply 7 is connected to the input terminals of an EMC filter 8. The outputs from the filter 8 are connected to a power supply 9 and a zero cross detector 10. The live output terminal from the EMC filter 8 is also connected to an input to a current sensor 11 and the output terminal of the current sensor 11 is connected to the input of a solid state power switch 12. The output terminal of the solid state power switch 12 is connected to the live terminal of a motor 13. The power supply 9 feeds an amplifier 14 and microcontroller 15 with low voltage direct current. A trigger 16 controlled by microcontroller 15 controls the solid state power switch 12.

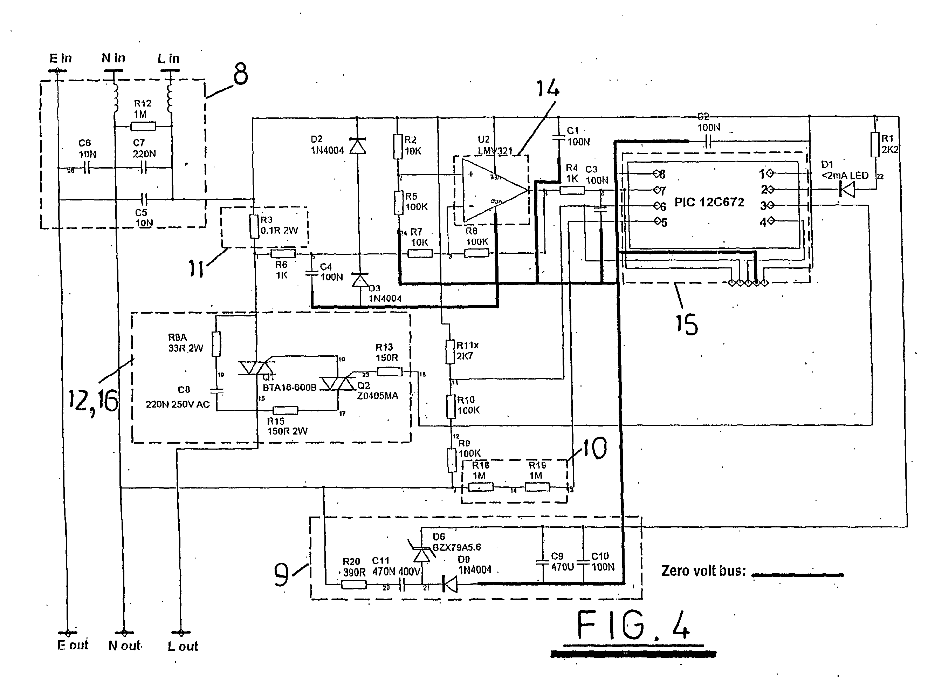

Fig. 4 is a more detailed circuit diagram of the single phase embodiment of the invention illustrated in figure 3. The Ein, Nin and Lin terminals are connected to the Earth, Neutral and Live conductors of the mains power supply 7. Series inductors, resistor R12 and capacitors C5-7 form the EMC Filter 8. The current sensor 11 is formed by resistor R3. The voltage across resistor R3 is amplified by amplifier 14 formed of operational amplifier, U2 and associated components. The output signal from the amplifier 14 is input to the microcontroller 15. The other input to the microcontroller 15, the zero crossing signal, is through resistors R18 and R19, and a further input for brownout protection is provided through resistors R9-11. An LED, D1, in conjunction with R1, provides an indication of satisfactory operation. The low voltage power supply 9 is provided at 5.5 volts DC by resistor R20, capacitors C9-11, diode D9 and zener diode D6.

The solid state switch 12 and trigger 16, are provided by the two triacs Q1, Q2 and associated resistors. The triac Q1 will turn off automatically when the power supply current crosses zero, and will only turn on if triggered to do so by the triac Q2. The delay between zero crossing and the turning on of triac Q1 is controlled as described below to control the proportion of time for which the triac Q1 is on.

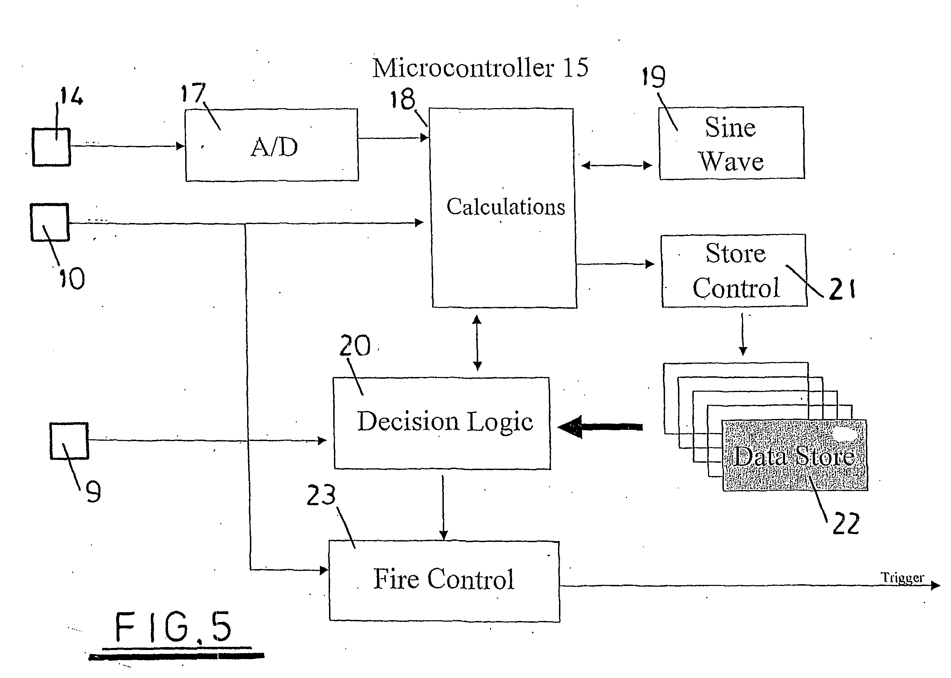

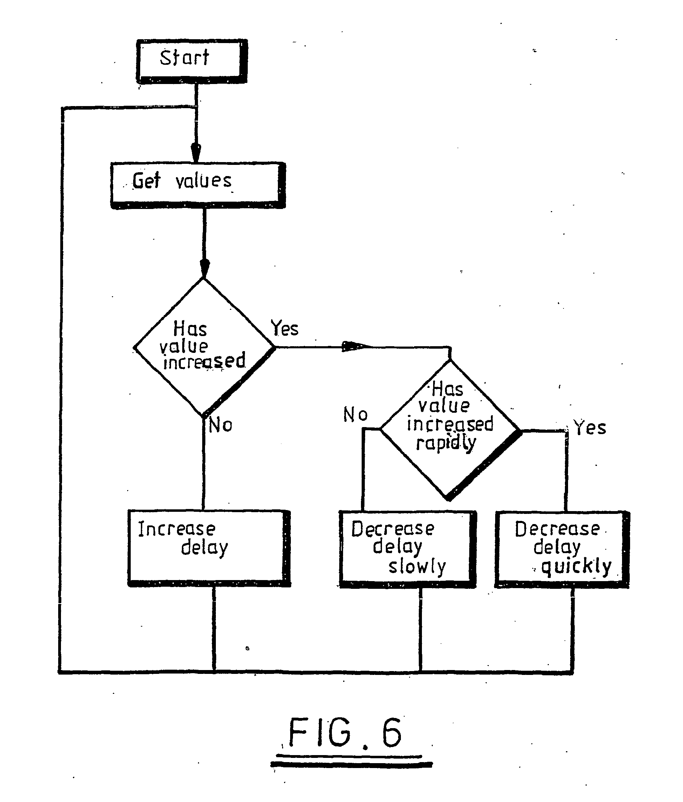

Figure 5 illustrates the first level functionality of the microcontroller 15, and figure 6 schematically illustrates the operation of the microcontroller 15. Referring to figure 5, an analogue to digital converter 17 converts the analogue sensed current value output of the amplifier 14 to digital format. A calculations unit 18 samples the digital current value at intervals after detection of zero crossing by detector 10. For example, sixteen current samples may be taken in a single half cycle of the supply. The calculation unit 18 also receives an input from a sine wave unit 19 which serves to provide an output representative of the supply voltage at each sampling interval. The calculation unit forms the product of the sampled current and the corresponding supply value.

The calculated values are delivered to decision logic module 20 and a store control module 21. The store control module 21 accumulates the sixteen products, sums the products to form a value representative of power consumption during one half cycle, and delivers the sum to a data store 22. The data store 22 stores the sum of values accumulated over sixteen consecutive half cycles such that the stored value is a rolling average which is not sensitive to short term current fluctuations and therefore represents a stable indication of power consumption.

The operation of the decision logic 20 is illustrated in figure 6. Decision logic 20 initiates the turning on of the solid state switch (Q1 in figure 4) via a fire control circuit module 23. Successive rolling average values from data store 22 are compared. If the later of the compared values is smaller than the earlier value, such that the value has decreased over time, the delay period between zero crossing and turning on of the solid state switch is increased. If the value has increased, then the delay is decreased. The decision logic 20 also monitors detected values directly from the calculation unit 18. If rapid current increases are detected, indicating a risk of the motor stalling, the rate at which the delay is decreased is increased. This speeds up the response of the system, reducing the risk of the motor stalling.

The decision logic 20 also monitors the output of the power supply 9 to provide "brownout" protection. If the supply fails, for example by falling to a mean voltage below a threshold value, the solid state switch is disabled for a period, e.g. a few seconds, and the circuit then attempts to restart the motor. If the supply has not been restored, a restart attempt will be made at intervals of a few minutes.

On start-up, whether after brownout or initial starting, the decision logic 20 initially sets the delay from zero crossing to switching on to a predetermined delay. The delay is then reduced in steps to a predetermined minimum, and then normal control is resumed as illustrated in figure 6.

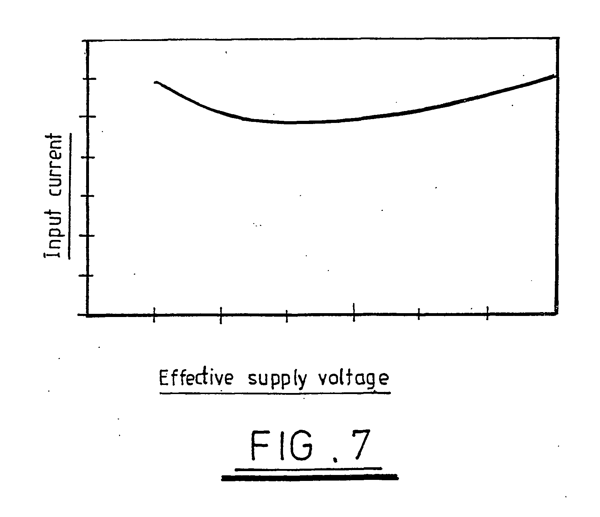

Referring to figure 7, this illustrates the relationship between sensed current and effective supply voltage which is itself a function of the duration of periods in which the solid state switch is off. For a given set of motor conditions, e.g. load and environmental conditions, there is a relationship between current and effective supply voltage which shows reducing current with increasing effective supply voltage followed by increasing current with further increases in effective supply voltage. Thus this relationship can be represented by a function which exhibits a minimum or "valley" as shown in figure 7. The present invention enables the controlled system to operate at or close to this minimum. Minimising the current in this way reduces power consumption. The invention may use simple current measurements to control the delay time and hence the effective supply voltage, or as described above may use the product of current and another parameter or parameters, for example voltage, to achieve a better measure of consumed power.

Thus the described circuit progressively reduces the effective supply voltage by progressively increasing the solid state switch-off period every half cycle until the current being supplied to the motor is sensed to increase. Thereafter the switch-off period is decreased to in order to increase the effective voltage. In normal conditions, the motor load is continuously varying and the control circuit readjusts the switch-off period every half-cycle accordingly. The current sensed may be with respect to either zero voltage crossing or zero current crossing. It may also be in-phase or out-of-phase current. The switch-off period may be limited to a maximum value by the control circuit to obviate excessive switch-off and hence excessively low effective voltages under very light load conditions.

In the case of a polyphase embodiment of the present circuit, each of the phases would be independently adjusted according to the corresponding current in each phase and the sum of the currents in each phase.

The monitoring and control circuit is powered by the low voltage DC power supply 9 regardless of the condition of the solid state switch 12. Thus, secondary features which may be incorporated in the monitoring and control circuit, and equipment incorporating the motor, such as radio frequency suppression, capacitive correction, and on/off controls for example, are not disrupted by the reduction in the power supplied in light load conditions.

The present invention may also incorporate auxiliary circuits to enhance its basic operation. Such auxiliary circuits may provide:
a diagnostic function which identifies circuit or controlled equipment abnormal operation or malfunction by means of either a coded LED, a liquid crystal display or an audible signal; and/or
a read-out of either power reduction or current reduction or energy saved.

The operation of the motor energisation control circuit according to the present invention ensures that the optimal minimum power for the particular motor load condition power is always being delivered in an efficient manner to the controlled motor. Under high load conditions and/or with high efficiency motors, power savings will be less than for standard motors under low load conditions. However, whatever the condition, the controller will ensure that the power supplied to the motor will be the minimum possible without the motor stalling. The effectiveness of the controller generally is not reduced by other electrical items such as run capacitors or long supply cables as it will always ensure minimum input current for those conditions.

## Claims

1. A circuit for controlling the energisation of an AC electric motor (13), comprising a solid state switch (12) which in use is connected to a power supply (7) in series with the motor (13), means (15, 16; 20, 23) for cyclically switching the solid state switch (12) on and off to control the supply of current to the motor (13) from the power supply (7), means (15; 20) for controlling the proportion of time for which the solid state switch (12) is turned on, means (11, 14) for sensing the magnitude of the current supplied to at least the motor (13), and means (1.5; 17, 18, 19) for calculating the value of a function of the current using the sensed current magnitude, the controlling means (15; 20) operating to minimise the calculated value, **characterised in that** the means for calculating the value of the function of the current are further defined such that the function represents the average of a series of values accumulated over a series of cycles of the supplied current.

2. A circuit according to claim 1, wherein the function represents the sum of a series of current values sampled during one or more cycles of the supplied current.

3. A circuit according to claim 1, wherein the function represents the sum of products of currents values and voltages, the current values being sampled during one or more cycles of the power supply, and the voltages being representative of the supply voltage at the time of current sampling.

4. A circuit according to any preceding claim, wherein the currents sensed includes current supplied to the switch (12).

5. A circuit according to any preceding claim, wherein the controlling means (15; 20) responds to a decrease in the calculated value by increasing the duration of periods for which the solid state switch (12) is turned off and responds to an increase in the calculated value by decreasing the duration of periods for which the solid state switch (12) is turned off.

6. A circuit according to claim 5, comprising means (15; 20) for monitoring the rate at which the calculated value changes, and means (15; 20) for rapidly decreasing the duration of off periods in response to a rapid rate of increase in the calculated value.

7. A circuit according to any preceding claim, comprising means for controlling start-up of the circuit including means for setting a predetermined start-up proportion of time for which the solid state switch is turned off, means for thereafter reducing the duration of periods for which the solid state switch is turned off until a predetermined minimum period is achieved, and means for thereafter enabling the controlling means to operate to minimise the calculated value.

8. A circuit according to any preceding claims, comprising means (9, 20) for detecting power supply failure, means (20) for turning off the solid state switch in response to detection of power supply failure, and means (20) for thereafter restarting the circuit after a predetermined delay.

9. A circuit according to any preceding claim, for use with a polyphase power supply, wherein a solid state switch (12), current sensor (11), switching means (15, 16; 20, 23) and controlling means (15; 20) is provided for each phase of polyphase supply.

10. A circuit according to any preceding claim, wherein the or each solid state switch (12) is switched off either once or twice every half cycle of the power supply (7).

11. A circuit according to any preceding claim, wherein the duration of any period during which the solid state switch (12) is switched off is limited to a maximum value.

12. A circuit according to any preceding claim, wherein the current sensors senses current in periods beginning with either zero voltage crossing or zero current crossing.

## Patentansprüche

1. Schaltung zur Steuerung der Speisung eines Wechselstrom-Elektromotors (13), umfassend einen Festkörperschalter (12), der in Verwendung mit einer Energieversorgung (7) in Reihe mit dem Motor (13) verbunden ist, Mittel (15, 16; 20, 23) zum zyklischen Ein- und Ausschalten des Festkörperschalters (12), um die Zuführung von Strom zum Motor (13) von der Energieversorgung (7) zu steuern, Mittel (15; 20) zum Steuern des Zeitanteils, für den der Festkörperschalter (12) eingeschaltet wird, Mittel (11, 14) zum Erfassen der Größe des Stroms, der mindestens dem Motor (13) zugeführt wird, und Mittel (15; 17, 18, 19) zum Berechnen des Werts einer Funktion des Stroms unter Verwendung der erfassten Stromgröße, wobei das Steuerungsmittel (15; 20) operiert, um den berechneten Wert zu minimieren, **dadurch gekennzeichnet, dass** die Mittel zum Berechnen des Werts der Funktion des Stroms weiterhin derart definiert sind, das die Funktion den Durchschnitt einer Reihe von Werten, die über eine Reihe von Zyklen des zugeführten Stroms akkumuliert wurde, repräsentiert.

2. Schaltung nach Anspruch 1, wobei die Funktion die Summe einer Reihe von Stromwerten repräsentiert, die während eines oder mehr Zyklen des zugeführten Stroms abgetastet wurden.

3. Schaltung nach Anspruch 1, wobei die Funktion die Summe von Produkten von Stromwerten und Spannungen repräsentiert, wobei die Stromwerte während eines oder mehr Zyklen der Energieversorgung abgetastet werden und die Spannungen repräsentativ für die Speisespannung zum Zeitpunkt der Stromabtastung sind.

4. Schaltung nach einem der vorstehenden Ansprüche, wobei der erfasste Strom Strom enthält, der dem Schalter (12) zugeführt wurde.

5. Schaltung nach einem der vorstehenden Ansprüche, wobei das Steuerungsmittel (15; 20) auf eine Verminderung des berechneten Werts durch Verlängerung der Dauer der Periode, für die der Festkörperschalter (12) ausgeschaltet wird, reagiert, und auf eine Erhöhung des berechneten Werts durch Verkürzung der Dauer der Perioden, für die der Festkörperschalter (12) aufgeschaltet wird, reagiert.

6. Schaltung nach Anspruch 5, umfassend Mittel (15; 20) zum Überwachen der Rate, bei der sich der berechnete Wert ändert, und Mittel (15; 20) zum schnellen Verkürzen der Dauer der Aus-Perioden als Reaktion auf eine schelle Erhöhungsrate des berechneten Werts.

7. Schaltung nach einem der vorstehenden Ansprüche, umfassen Mittel zum Steuern des Hochfahrens der Schaltung, einschließlich von Mitteln zum Einstellen eines vorbestimmten Hochfahr-Zeitanteils, für den der Festkörperschalter ausgeschaltet ist, Mitteln zum anschließenden Reduzieren der Dauer der Perioden, für die der Festkürperschalter ausgeschaltet wird, bis eine vorbestimmte minimale Periode erreicht Wird, und Mitteln zum anschließenden Aktivieren des Steuerungsmittels, um zum Minimieren des berechneten Werts zu operieren.

8. Schaltung nach einem der vorstehenden Ansprüche, umfassend Mittel (9, 20) zum Detektieren eines Ausfalls der Energieversorgung, Mittel (20) zum Ausschalten des Festkörperschalters als Reaktion auf die Detektion eines Ausfalls der Energieversorgung und Mittel (20) zum anschließenden Neustarten der Schaltung nach einer vorbestimmten Verzögerung.

9. Schaltung nach einem der vorstehenden Ansprüche zur Verwendung mit einer Mehrphasen-Energieversorgung, wobei ein Festkörperschalter (12), ein Stromsensor (11), Schaltmittel (15, 16; 20, 23) und Steuerungsmittel (15; 20) für jede Phase der Mehrphasen-Versorgung bereitgestellt werden.

10. Schaltung nach einem der vorstehenden Ansprüche, wobei der oder jeder Festkörperschalter (12) jeden halben Zyklus der Energieversorgung (7) entweder einmal oder zweimal ausgeschaltet wird.

11. Schaltung nach einem der vorstehenden Ansprüche, wobei die Dauer einer Periode, während der der Festkörperschalter (12) ausgeschaltet wird, auf einen Maximalwert begrenzt ist.

12. Schaltung nach einem der vorstehenden Ansprüche, wobei der Stromsensor Strom in Perioden, die entweder mit Nullspannungsdurchgang oder Nullstromdurchgang beginnen, erfasst.

## Revendications

1. Circuit pour commander l'alimentation d'un moteur électrique à courant alternatif (13), comprenant un commutateur à l'état solide (12) qui, en utilisation, est connecté à une alimentation (7) en série avec le moteur (13), un moyen (15, 16; 20, 23) pour commuter de façon cyclique le commutateur à l'état solide (12) dans l'état d'activation et dans l'état de désactivation afin de commander l'application de courant sur le moteur (13) depuis l'alimentation (7), un moyen (15; 20) pour commander la proportion de temps pendant laquelle le commutateur à l'état solide (12) est activé, un moyen (11, 14) pour détecter la grandeur du courant appliqué sur au moins le moteur (13) et un moyen (15; 17, 18, 19) pour calculer la valeur d'une fonction du courant en utilisant la grandeur de courant détectée, le moyen de commande (15; 20) fonctionnant pour minimise la valeur calculée, **caractérisé en ce que** le moyen pour calculer la valeur de la fonction du courant est en outre défini de telle sorte que la fonction représente la moyenne d'une série de valeurs accumuluées sur une série de cycles du courant appliqué.

2. Circuit selon la revendication 1, dans lequel la fonction représente la somme d'une série de valeurs de courant échantillonnées pendant un ou plusieurs cycles du courant appliqué.

3. Circuit selon la revendication 1, dans lequel la fonction représente la somme de produits de valeurs de courant et de tensions, les valeurs de courant étant échantillonnées pendant un ou plusieurs cycles de l'alimentation et les tensions étant représentatives de la tension d'alimentation au moment de l'échantillonnage du courant.

4. Circuit selon l'une quelconque des revendications précédentes, dans lequel le courant détecté inclut un courant appliqué sur le commutateur (12).

5. Circuit selon l'une quelconque des revendications précédentes, dans lequel le moyen de commande (15; 20) répond à une diminution de la valeur calculée en augmentant la durée de périodes pendant lesquelles le commutateur à l'état solide (12) est désactivé et répond à une augmentation de la valeur calculée en diminuant la durée de périodes pendant lesquelles le commutateur à l'état solide (12) est désactivé.

6. Circuit selon la revendication 5, comprenant un moyen (15; 20) pour surveiller la vitesse à laquelle la valeur calculée varie et un moyen (15; 20) pour diminuer rapidement la durée de périodes de désactivation en réponse à une vitesse d'augmentation rapide de la valeur calculée.

7. Circuit selon l'une quelconque des revendications précédentes, comprenant un moyen pour commander le démarrage du circuit incluant un moyen pour établir une proportion de temps de démarrage prédéterminée pendant laquelle le commutateur à l'état solide est désactivé, un moyen pour ensuite réduire la durée de périodes pendant lesquelles le commutateur à l'état solide est désactivé jusqu'à ce qu'une période minimum prédéterminée soit atteinte et un moyen pour ensuite permettre que le moyen de commande fonctionne afin de minimiser la valeur calculée.

8. Circuit selon l'une quelconque des revendications précédentes, comprenant un moyen (9, 20) pour détecter une défaillance d'alimentation, un moyen (20) pour désactiver le commutateur à l'état solide en réponse à la détection d'une défaillance d'alimentation et un moyen (20) pour ensuite redémarrer le circuit après un retard prédéterminé.

9. Circuit selon l'une quelconque des revendications précédentes, pour une utilisation avec une alimentation polyphase, dans lequel un commutateur à l'état solide (12), un capteur de courant (11), un moyen de commutation (15, 16; 20, 23) et un moyen de commande (15; 20) sont prévus pour chaque phase d'alimentation polyphase.

10. Circuit selon l'une quelconque des revendications précédentes, dans lequel le ou chaque commutateur à l'état solide (12) est commuté dans l'état de désactivation soit une fois, soit deux fois à chaque demi-cycle de l'alimentation (7).

11. Circuit selon l'une quelconque des revendications précédentes, dans lequel la durée d'une quelconque période pendant laquelle le commutateur à l'état solide (12) est commuté dans l'état de désactivation est limitée à une valeur maximum.

12. Circuit selon l'une quelconque des revendications précédentes, dans lequel le capteur de courant détecte un courant dans des périodes commençant par soit un passage par la tension zéro, soit un passage par le courant zéro.
